# EUROPÄISCHE PATENTSCHRIFT

(11) **EP 2 719 001 B1**
(45) Veröffentlichungstag und Bekanntmachung des Hinweises auf die Patenterteilung: **25.11.2015**
(21) Anmeldenummer: 12796075.5
(22) Anmeldetag: 05.06.2012
(51) Int. Cl.: H01M 4/137, H01M 10/052, H01M 4/60, H01M 4/36, H01M 4/38

(54) **ELEKTRODENMATERIALIEN FÜR ELEKTRISCHE ZELLEN**
ELECTRODE MATERIALS FOR ELECTRICAL CELLS
MATÉRIAUX D'ÉLECTRODE POUR CELLULES ÉLECTRIQUES

(30) Priorität: 08.06.2011 EP 11169092
(43) Veröffentlichungstag der Anmeldung: 16.04.2014
(73) Patentinhaber: BASF SE, 67056 Ludwigshafen (DE)
(72) Erfinder: GRONWALD, Oliver, 60316 Frankfurt (DE); PANCHENKO, Alexander, 67071 Ludwigshafen (DE); GARSUCH, Arnd, 67063 Ludwigshafen (DE)
(86) Internationale Anmeldenummer: PCT/IB2012/052809
(87) Internationale Veröffentlichungsnummer: WO 2012/168851

(56) Entgegenhaltungen:
- EP-A2- 0 318 430
- WO-A1-02/082569
- WO-A1-2007/086519
- JP-A- 5 266 926
- JP-A- 2006 241 542
- US-A- 5 723 230
- US-B1- 6 200 704
- US-B1- 6 201 100
- US-B1- 6 210 832
- KATSUHIKO NAOI ET AL: "A New Energy Storage Material: Organosulfur Compounds Based on Multiple Sulfur-Sulfur Bonds", JOURNAL OF THE ELECTROCHEMICAL SOCIETY, Bd. 144, Nr. 6, 1. Juni 1997 (1997-06-01), Seiten 170-172, XP055165896, ISSN: 0013-4651, DOI: 10.1149/1.1837714

## Beschreibung

Die vorliegende Erfindung betrifft Elektrodenmaterialien für geladene elektrische Zellen enthaltend mindestens ein Polysulfidbrücken enthaltendes Polymer sowie Kohlenstoff in einer Modifikation, die mindestens 60% sp²-hybridisierte C-Atome umfasst.

Weiterhin betrifft die vorliegende Erfindung elektrische Zellen enthaltend das erfindungsgemäße Elektrodenmaterial, sowie die Verwendung der erfindungsgemäßen Zellen.

Sekundärbatterien, Akkumulatoren, Akkus oder "wiederaufladbare Batterien" sind nur einige Ausführungsformen, um elektrische Energie nach der Erzeugung zu speichern und bei Bedarf einsetzen zu können. Wegen der deutlich besseren Leistungsdichte ist man in jüngerer Zeit von den wasserbasierten Sekundärbatterien abgekommen und entwickelt solche Batterien, bei denen der Ladungstransport in der elektrischen Zelle durch Lithium-Ionen bewerkstelligt wird.

Herkömmliche Lithium-Ionen-Akkumulatoren, die eine Kohlenstoff-Anode und eine auf Metalloxiden basierende Kathode aufweisen, sind jedoch in ihrer Energiedichte begrenzt. Neue Dimensionen bezüglich der Energiedichte wurden durch Lithium-Schwefel-Zellen eröffnet. In Lithium-Schwefel-Zellen wird Schwefel in der Schwefel-Kathode über Polysulfidionen zu S²⁻ reduziert, die beim Laden der Zelle wieder unter Ausbildung von Schwefel-Schwefel-Bindungen oxidiert werden.

Problematisch ist jedoch die Löslichkeit der Polysulfide, beispielsweise Li₂S₄ und Li₂S₆, die im Lösungsmittel löslich sind und zur Anode wandern können. Die Folgen können unter anderem sein: Verlust an Kapazität und Abscheidung von elektrisch isolierendem Material auf den Schwefelpartikeln der Elektrode. Die Wanderung der Polysulfid-Ionen von der Kathode zu Anode kann letztendlich zu einer Entladung der betroffenen Zelle und zum Zelltod in der Batterie führen. Diese unerwünschte Wanderung von Polysulfid-Ionen wird im Englischen auch als "shuttle" bezeichnet, ein Begriff, der als Shuttle auch im Rahmen der vorliegenden Erfindung gebraucht wird.

Es gibt zahlreiche Versuche, diesen Shuttle zu unterdrücken. Beispielsweise schlagen J. Wang et al. vor, der Kathode ein Reaktionsprodukt von Schwefel und Polyacrylnitril zuzusetzen, Adv. Funct. Mater. 2003, 13, 487 ff. Es bildet sich ein Produkt, welches durch Wasserstoffabspaltung aus Polyacrylnitril bei gleichzeitiger Schwefelwasserstoffbildung entsteht.

Es wurde weiterhin vorgeschlagen, Sulfide statt Schwefel einzusetzen, beispielsweise CuS, FeS₂ oder 2,5-Dimercapto-1,3,4-thiadiazol. Die Kapazität derartiger Zellen war allerdings nicht befriedigend, s. beispielsweise P. Wang, J. Electrochem. Soc. 2002, A1171-1174, 149 und J. Wang et al., J. Power Sources 2004, 138, 271.

Ebenfalls wurde der Ersatz von reinem Schwefel durch Disulfidbrücken enthaltende Polymere vorgeschlagen. So beschreibt Liu die Verwendung von Polyorganodisulfiden als Materialien für feste Redox-Polymerisations-Elektroden (M. Liu et. al, J. Electrochem. Soc., 1991, 138, 1896-1901, US 5,162,175). Die Elektrode wird in wiederaufladbaren Zellen zusammen mit polymeren Elektrolyten eingesetzt. Allerdings sind für den Betrieb der Zelle hohe Temperaturen von 80 bis 130 °C erforderlich, und die erreichten spezifischen Kapazitäten sind sehr gering.

In J. Electrochem. Soc., Vol. 144, Nr. 6, Seiten 170 bis 172 beschreiben K. Naoi et al. Organo-Schwefel-Verbindungen, die Polysulfidbrücken enthalten, als Materialien für die Speicherung von elektrochemischer Energie.

In US 5,723,230 werden Polymere für die Speicherung von elektrochemischer Energie vorgestellt, die über eine verbesserte Energiedichte verfügen, wobei diese Polymere Tri- bis Octasulfid-Brücken enthalten, wie beispielsweise ein Polymer basierend auf Trithiocyanursäure verknüpft über Tetrasulfidbrücken.

In US 6,201,100 werden hochvernetzte organische Polymere als elektrochemische Energiespeicher beschrieben, die nicht-aromatische carbocyclische Wiederholungseinheiten enthalten, die über mehrere Polysulfidbrücken miteinander verbunden sind.

Es bestand also die Aufgabe, ein Kathodenmaterial bereit zu stellen, welches einfach herzustellen ist und die aus dem Stand der Technik bekannten Nachteile vermeidet.

Diese Aufgabe wird durch Elektrodenmaterialien für geladene elektrische Zellen enthaltend
(A) Polysulfidbrücken enthaltendes Polymer enthaltend zwei- oder dreibindige Wiederholungseinheiten der Formel (I) 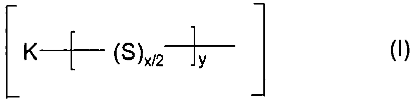 worin
   - K: einen zwei- oder dreibindigen organischen Rest mit 1 bis 20 Kohlenstoffatomen darstellt, der weitere funktionelle Gruppen und/oder ein oder mehrere Heteroatome ausgewählt aus der Gruppe der Elemente bestehend aus O, S, N, P, Si und F enthalten kann,
   - y: gleich 2 oder 3 ist,
   - x: gleich oder verschieden sein kann und eine ganze Zahl von 3 bis 12 ist, und mindestens einer der Reste K über y (S)ₓ-Brücken mit y weiteren Resten K verknüpft ist,
(B) Kohlenstoff in einer Modifikation, die mindestens 60% sp²-hybridisierte C-Atome umfasst, und
(C) gegebenenfalls mindestens ein weiteres Polymer als Bindemittel,
dadurch gekennzeichnet, dass das Elektrodenmaterial als weitere Komponente (D) Wolframcarbid enthält, gelöst.

Das in dem erfindungsgemäßen Elektrodenmaterial enthaltene Polysulfidbrücken enthaltende Polymer (A) enthält zwei- oder dreibindige, bevorzugt dreibindige Wiederholungseinheiten der Formel (I) 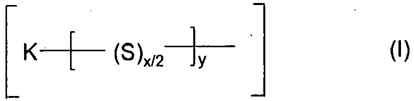 worin
- K: einen zwei- oder dreibindigen, bevorzugt dreibindigen organischen Rest mit 1 bis 20 Kohlenstoffatomen darstellt, der weitere funktionelle Gruppen und/oder ein oder mehrere Heteroatome ausgewählt aus der Gruppe der Elemente bestehend aus O, S, N, P, Si und F, bevorzugt O, S und N, insbesondere N enthalten kann,
- y: gleich 2 oder 3, bevorzugt 3 ist,
- x: gleich oder verschieden sein kann und eine ganze Zahl von 3 bis 12, bevorzugt von 3 bis 6, insbesondere 4 ist, und mindestens einer der Reste K über y (S)ₓ-Brücken mit y weiteren Resten K verknüpft ist.

Polysulfidbrücken enthaltende Polymere (A), bei denen K einen zweibindigen organischen Rest darstellt, werden seit 1929 industriell als kautschukartige Materialien produziert. Polyethylentetrasulfid stellt gleichsam den Prototyp dieser als Thioplaste bezeichneten Werkstoffe dar, die beispielsweise als Dichtmaterialien in der Bauindustrie Anwendung finden.

Der zwei- oder dreibindige organische Rest K leitet sich prinzipiell von einer beliebigen organischen Verbindung mit 1 bis 20 Kohlenstoffatomen ab, bei der zwei oder drei einbindige Reste oder Substituenten, üblicherweise Wasserstoffatome, gedanklich abstrahiert werden, so dass ein Rest K mit zwei oder drei nicht abgesättigen, radikalischen Atomen, insbesondere Kohlenstoffatomen, entsteht. Die nicht abgesättigten zwei oder drei Atome des organischen Restes K stellen die Anknüpfungsstellen für die Schwefelbrücken dar.

Bei den organischen Verbindungen, von denen sich der zwei- oder dreibindige organische Rest K ableitet, handelt es sich beispielsweise um C₁-C₂₀-Alkane, gesättigte C₃-C₂₀-Heterocyclen, C₆-C₂₀-Aromaten oder C₂-C₂₀-Heteroaromaten, wobei die organische Verbindung auch Doppel- und Dreifachbindungen sowie weitere Heteroatome ausgewählt aus der Gruppe der Elemente bestehend aus F, Cl, Br, I, N, P, Si, O und S enthalten kann und/oder mit funktionellen Gruppen substituiert sein kann.

Beispiele für mögliche zwei- oder dreibindige organische Reste K sind: 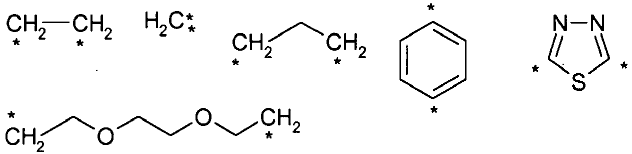 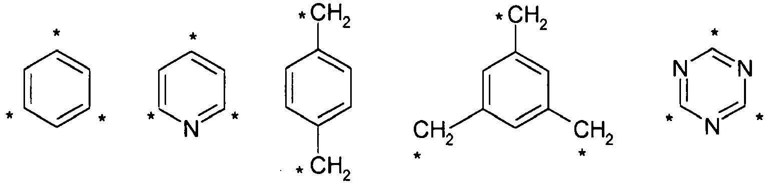 insbesondere 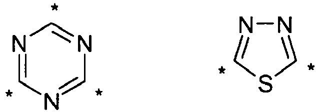 worin die (S)ₓ-Brücken an den mit * gekennzeichneten Atomen anknüpfen.

Besonders bevorzugt stellt in dem Polysulfidbrücken enthaltenden Polymer (A) K einen Rest der Formel (II) dar, 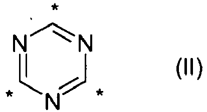 worin die (S)ₓ-Brücken an den mit * gekennzeichneten Kohlenstoffatomen anknüpfen.

Ganz besonders bevorzugt ist ein Polysulfidbrücken enthaltendes Polymer (A), worin die Wiederholungseinheit der Formel (I) durch eine Wiederholungseinheit der Formel (Ib) charakterisiert ist.

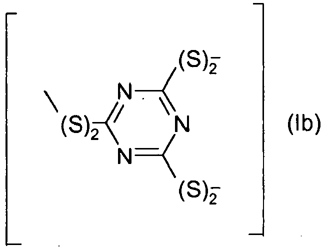

Das erfindungsgemäße Elektrodenmaterial für eine geladene elektrische Zelle enthält weiterhin Kohlenstoff in einer Modifikation, die mindestens 60% sp²-hybridisierte C-Atome, bevorzugt von 75% bis 100% sp²-hybridisierte C-Atome umfasst. Dieser Kohlenstoff wird im Rahmen der vorliegenden Erfindung auch kurz Kohlenstoff (B) genannt und ist als solcher bekannt. Bei dem Kohlenstoff (B) handelt es sich um eine elektrisch leitfähige Modifikation von Kohlenstoff. Kohlenstoff (B) kann man beispielsweise aus Graphit, Ruß, Kohlenstoffnanoröhren, Graphen oder Mischungen von mindestens zwei der vorstehend genannten Stoffen wählen.

Dabei beziehen sich Angaben in % auf den gesamten Kohlenstoff (B), der zusammen mit dem Polysulfidbrücken enthaltenden Polymer (A), in dem Elektrodenmaterial enthalten ist, einschließlich etwaiger Verunreinigungen, und bezeichnen Gewichtsprozent.

In einer Ausführungsform der vorliegenden Erfindung handelt es sich bei Kohlenstoff (B) um Ruß. Ruß kann beispielsweise gewählt werden aus Lampenruß, Ofenruß, Flammruß, Thermalruß, Acetylenruß, Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen. Weiterhin sind Schwefel- oder Eisen-haltige Verunreinigungen in Ruß möglich.

In einer Variante handelt es sich bei Kohlenstoff (B) um partiell oxidierten Ruß.

In einer Ausführungsform der vorliegenden Erfindung handelt es sich bei Kohlenstoff (B) um Kohlenstoff-Nanoröhren (englisch carbon nanotubes). Kohlenstoff-Nanoröhren (Kohlenstoffnanoröhren, kurz CNT oder englisch Carbon nanotubes), beispielsweise einwandige Kohlenstoffnanoröhren (englisch single-walled carbon nanotubes, SW CNT) und bevorzugt mehrwandige Kohlenstoffnanoröhren (englisch multi-walled carbon nanotubes, MW CNT), sind an sich bekannt. Ein Verfahren zu ihrer Herstellung und einige Eigenschaften werden beispielsweise von A. Jess et al. in Chemie Ingenieur Technik 2006, 78, 94-100 beschrieben.

In einer Ausführungsform der vorliegenden Erfindung haben Kohlenstoffnanoröhren einen Durchmesser im Bereich von 0,4 bis 50 nm, bevorzugt 1 bis 25 nm.

In einer Ausführungsform der vorliegenden Erfindung haben Kohlenstoffnanoröhren eine Länge im Bereich von 10 nm bis 1 mm, bevorzugt 100 nm bis 500 nm.

Kohlenstoff-Nanoröhren kann man nach an sich bekannten Verfahren herstellen. Beispielsweise kann man eine flüchtige Kohlenstoff-haltige Verbindung wie beispielsweise Methan oder Kohlenmonoxid, Acetylen oder Ethylen, oder ein Gemisch von flüchtigen Kohlenstoff-haltigen Verbindungen wie beispielsweise Synthesegas in Gegenwart von einem oder mehreren Reduktionsmitteln wie beispielsweise Wasserstoff und/oder einem weiteren Gas wie beispielsweise Stickstoff zersetzen. Ein anderes geeignetes Gasgemisch ist eine Mischung von Kohlenmonoxid mit Ethylen. Geeignete Temperaturen zur Zersetzung liegen beispielsweise im Bereich von 400 bis 1000°C, bevorzugt 500 bis 800°C. Geeignete Druckbedingungen für die Zersetzung sind beispielsweise im Bereich von Normaldruck bis 100 bar, bevorzugt bis 10 bar.

Ein- oder mehrwandige Kohlenstoffnanoröhren kann man beispielsweise durch Zersetzung von Kohlenstoff-haltigen Verbindungen im Lichtbogen erhalten, und zwar in Anwesenheit bzw. Abwesenheit eines Zersetzungskatalysators.

In einer Ausführungsform führt man die Zersetzung von flüchtiger Kohlenstoff-haltiger Verbindung bzw. Kohlenstoff-haltigen Verbindungen in Gegenwart eines Zersetzungskatalysators durch, beispielsweise Fe, Co oder bevorzugt Ni.

Unter Graphen werden im Rahmen der vorliegenden Erfindung fast ideal oder ideal zweidimensionale hexagonale Kohlenstoffkristalle verstanden, die analog zu einzelnen Graphitschichten aufgebaut sind.

In einer bevorzugten Ausführungsform der vorliegenden Erfindung wählt man Kohlenstoff (B) aus Graphit, Graphen, Aktivkohle und insbesondere Ruß.

Kohlenstoff (B) kann beispielsweise in Partikeln vorliegen, die einen Durchmesser im Bereich von 0,1 bis 100 µm aufweisen, bevorzugt 2 bis 20 µm. Dabei wird unter dem Partikeldurchmesser der mittlere Durchmesser der Sekundärpartikel verstanden, bestimmt als Volumenmittel.

In einer Ausführungsform der vorliegenden Erfindung weist Kohlenstoff (B) und insbesondere Ruß eine Oberfläche nach BET im Bereich von 20 bis 1500 m²/g auf, gemessen nach ISO 9277.

In einer Ausführungsform der vorliegenden Erfindung vermischt man mindestens zwei, beispielsweise zwei oder drei verschiedene Arten von Kohlenstoff (B). Verschiedene Arten von Kohlenstoff (B) können sich beispielsweise im Hinblick auf Partikeldurchmesser oder BET-Oberfläche oder Ausmaß an Verunreinigung unterscheiden.

In einer Ausführungsform der vorliegenden Erfindung wählt man als Kohlenstoff (B) eine Kombination von zwei verschiedenen Rußen aus.

In einer Ausführungsform der vorliegenden Erfindung enthält erfindungsgemäßes Elektrodenmaterial im Bereich von 20 bis 80 Gew.-%, bevorzugt 30 bis 70 Gew.-% an Schwefel, bestimmt durch Elementaranalyse.

In einer Ausführungsform der vorliegenden Erfindung enthält erfindungsgemäßes Elektrodenmaterial im Bereich von 0,1 bis 40 Gew.-% Kohlenstoff (B), bevorzugt 1 bis 30 Gew.-%. Dieser Kohlenstoff ist ebenfalls beispielsweise durch Elementaranalyse bestimmbar, wobei man bei der Auswertung der Elementaranalyse berücksichtigen muss, dass auch über Polymer (A), und gegebenenfalls weitere Quellen Kohlenstoff in erfindungsgemäßes Elektrodenmaterial kommt.

Weiterhin enthält das erfindungsgemäße Elektrodenmaterial für eine geladene elektrische Zelle neben dem Polysulfidbrücken enthaltenden Polymer (A) und dem Kohlenstoff (B) gegebenenfalls mindestens ein weiteres Polymer als Bindemittel, welches im Rahmen der vorliegenden Erfindung auch kurz als Bindemittel (C) bezeichnet wird. Bindemittel (C) dient hauptsächlich der mechanischen Stabilisierung von erfindungsgemäßem Elektrodenmaterial.

In einer Ausführungsform der vorliegenden Erfindung wählt man Bindemittel (C) aus organischen (Co)polymeren. Beispiele für geeignete organische (Co)polymere können halogeniert oder halogen-frei sein. Beispiele sind Polyethylenoxid (PEO), Cellulose, Carboxymethylcellulose, Polyvinylalkohol, Polyethylen, Polypropylen, Polytetrafluorethylen, Polyacrylnitril-Methylmethacrylat-Copolymere, Styrol-Butadien-Copolymere, Tetrafluoroethylen-Hexafluorpropylen-Copolymere, Vinylidenfluorid-Hexafluorpropylen-Copolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-Chlortrifluoroethylen-Copolymere, Ethylen-Chlorfluorethylen-Copolymere, Ethylen-Acrylsäure-Copolymere, gegebenenfalls zumindest partiell mit Alkalimetallsalz oder Ammoniak neutralisiert, Ethylen-Methacrylsäure-Copolymere, gegebenenfalls zumindest partiell mit Alkalimetallsalz oder Ammoniak neutralisiert, Ethylen-(Meth)acrylsäureester-Copolymere, Polyimide und Polyisobuten.

Geeignete Bindemittel sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

Das mittlere Molekulargewicht M_{w} von Bindemittel (C) kann man in weiten Grenzen wählen, geeignet sind beispielsweise 20.000 g/mol bis 1.000.000 g/mol.

In einer Ausführungsform der vorliegenden Erfindung enthält das erfindungsgemäße Elektrodenmaterial im Bereich von 0,1 bis 10 Gew.-% Bindemittel, bevorzugt 1 bis 8 Gew.-% und besonders bevorzugt 3 bis 6 Gew.-% bezogen auf die Gesamtmasse der Komponenten (A), (B) und (C).

Bindemittel (C) kann man nach verschiedenen Verfahren in erfindungsgemäßes Elektrodenmaterial einarbeiten. So ist es beispielsweise möglich, lösliche Bindemittel (C) wie Polyvinylalkohol in einem geeigneten Lösemittel oder Lösemittelgemisch zu lösen, beispielsweise ist Wasser/lsopropanol für Polyvinylalkohol geeignet, und eine Suspension mit den weiteren Bestandteilen des Elektrodenmaterials herzustellen. Nach dem Aufbringen auf eine geeignete Unterlage wird das Lösemittel oder Lösemittelgemisch entfernt, beispielsweise verdampft, und man erhält eine Elektrode aus dem erfindungsgemäßen Elektrodenmaterial. Geeignetes Lösemittel für Polyvinylidenfluorid ist NMP.

Wünscht man schwerlösliche Polymere als Bindemittel (C) einzusetzen, beispielsweise Polytetrafluorethylen oder Tetrafluorethylen-Hexafluorpropylen-Copolymere, so stellt man eine Suspension von Partikeln des betreffenden Bindemittels (C) und den weiteren Bestandteilen des Elektrodenmaterials her und presst sie unter Hitze zusammen.

Das erfindungsgemäßes Elektrodenmaterial enthält als weitere Komponente (D) Wolframcarbid. Vorzugsweise liegt das Wolframcarbid als feinteiliges Pulver vor, welches bevorzugt eine Partikelgröße kleiner als 50 µm, insbesondere kleiner als 20 µm ausweist.

Erfindungsgemäße Elektrodenmaterialien eignen sich besonders gut als oder zur Herstellung von Elektroden, insbesondere zur Herstellung von Elektroden von Lithium-haltigen Batterien.

Gegenstand der vorliegenden Erfindung ist die Verwendung von erfindungsgemäßen Elektrodenmaterialien als oder zur Herstellung von Elektroden für elektrische Zellen. Ein weiterer Gegenstand der vorliegenden Erfindung sind elektrische Zellen, enthaltend mindestens eine Elektrode, die aus oder unter Verwendung von mindestens einem erfindungsgemäßen Elektrodenmaterial hergestellt wurde.

In einer Ausführungsform der vorliegenden Erfindung handelt es sich bei der betreffenden Elektrode um die Kathode. Dabei wird im Rahmen der vorliegenden Erfindung diejenige Elektrode als Kathode bezeichnet, die beim Entladen (Arbeiten) reduzierend wirkt.

In einer Ausführungsform der vorliegenden Erfindung verarbeitet man erfindungsgemäßes Elektrodenmaterial zu Elektroden, beispielsweise in Form von Endlosbändern, die vom Batteriehersteller verarbeitet werden.

Aus erfindungsgemäßem Elektrodenmaterial hergestellte Elektroden können beispielsweise Dicken im Bereich von 20 bis 500 µm, bevorzugt 40 bis 200 µm aufweisen. Sie können beispielsweise stabförmig, in Form von runden, elliptischen oder quadratischen Säulen oder quaderförmig ausgebildet sein oder als flächige Elektroden.

In einer Ausführungsform der vorliegenden Erfindung enthalten erfindungsgemäße elektrische Zellen neben erfindungsgemäßem Elektrodenmaterial mindestens eine Elektrode, die metallisches Zink, metallisches Natrium oder vorzugsweise metallisches Lithium enthält.

In einer weiteren Ausführungsform der vorliegenden Erfindung umfassen vorangehend beschriebene erfindungsgemäße elektrische Zellen neben erfindungsgemäßem Elektrodenmaterial einen flüssigen Elektrolyten, der ein Lithium-haltiges Leitsalz enthält.

In einer Ausführungsform der vorliegenden Erfindung enthalten erfindungsgemäße elektrische Zellen neben erfindungsgemäßem Elektrodenmaterial und einer weiteren Elektrode, insbesondere einer Elektrode, die metallisches Lithium enthält, mindestens ein nicht-wässriges Lösungsmittel, das bei Zimmertemperatur flüssig oder fest sein kann, vorzugsweise bei Zimmertemperatur flüssig ist, und das bevorzugt gewählt wird aus Polymeren, cyclischen oder nicht-cyclischen Ethern, cyclischen oder nicht-cyclischen Acetalen, cyclischen oder nicht cyclischen organischen Carbonaten und ionischen Flüssigkeiten (englisch ionic liquids).

Beispiele für geeignete Polymere sind insbesondere Polyalkylenglykole, bevorzugt Poly-C₁-C₄-alkylenglykole und insbesondere Polyethylenglykole. Dabei können Polyethylenglykole bis zu 20 mol-% ein oder mehrere C₁-C₄-Alkylenglykole einpolymerisiert enthalten. Vorzugsweise handelt es sich bei Polyalkylenglykolen um zweifach mit Methyl oder Ethyl verkappte Polyalkylenglykole.

Das Molekulargewicht M_{w} von geeigneten Polyalkylenglykolen und insbesondere von geeigneten Polyethylenglykolen kann mindestens 400 g/mol betragen.

Das Molekulargewicht M_{w} von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan.

Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-Dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (X) und (XI) 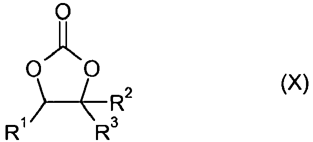 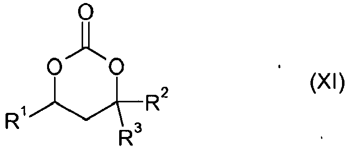 bei denen R¹, R² und R³ gleich oder verschieden sein können und gewählt aus Wasserstoff und C₁-C₄-Alkyl, beispielsweise Methyl, Ethyl, n-Propyl, iso-Propyl, n-Butyl, iso-Butyl, sec.-Butyl und tert.-Butyl, wobei vorzugsweise R² und R³ nicht beide tert.-Butyl sind.

In besonders bevorzugten Ausführungsformen ist R¹ Methyl und R² und R³ sind jeweils Wasserstoff, oder R¹, R² und R³ sind jeweils gleich Wasserstoff.

Ein anderes bevorzugtes cyclisches organisches Carbonat ist Vinylencarbonat, Formel (XII).

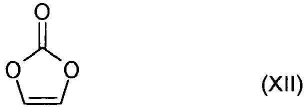

Vorzugsweise setzt man das oder die Lösungsmittel im so genannten wasserfreien Zustand ein, d.h. mit einem Wassergehalt im Bereich von 1 ppm bis 0,1 Gew.-%, bestimmbar beispielsweise durch Karl-Fischer-Titration.

In einer Ausführungsform der vorliegenden Erfindung enthalten erfindungsgemäße elektrochemische Zellen ein oder mehrere Leitsalze, bevorzugt sind Lithiumsalze. Beispiele für geeignete Lithiumsalze sind LiPF₆, LiBF₄, LiClO₄, LiAsF₆, LiCF₃SO₃, LiC(CₙF₂ₙ₊₁SO₂)₃, Lithiumimide wie LiN(CₙF₂ₙ₊₁SO₂)₂, wobei n eine ganze Zahl im Bereich von 1 bis 20 ist, LiN(SO₂F)₂, Li₂SiF₆, LiSbF₆, LiAlCl₄, und Salze der allgemeinen Formel (CₙF₂ₙ₊₁SO₂)ₘXLi, wobei m wie folgt definiert ist:
m = 1 wenn X gewählt wird aus Sauerstoff und Schwefel,
m = 2 wenn X gewählt wird aus Stickstoff und Phosphor, und
m = 3 wenn X gewählt wird aus Kohlenstoff und Silizium.

Bevorzugte Leitsalze sind gewählt aus LiC(CF₃SO₂)₃, LiN(CF₃SO₂)₂, LiPF₆, LiBF₄, LiClO₄, und besonders bevorzugt sind LiPF₆ und LiN(CF₃SO₂)₂.

In einer Ausführungsform der vorliegenden Erfindung enthalten erfindungsgemäße elektrochemische Zellen einen oder mehrere Separatoren, durch die die Elektroden mechanisch getrennt sind. Als Separatoren sind Polymerfilme, insbesondere poröse Polymerfilme, geeignet, die gegenüber metallischem Lithium und gegenüber Lithiumsulfiden und Lithium-Polysulfiden unreaktiv sind. Besonders geeignete Materialien für Separatoren sind Polyolefine, insbesondere filmförmiges poröses Polyethylen und filmförmiges poröses Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

In einer anderen Ausführungsform der vorliegenden Erfindung kann man als Separatoren Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm.

Erfindungsgemäße elektrische Zellen zeichnen sich durch besonders hohe Kapazitäten, hohe Leistungen auch nach wiederholtem Aufladen und stark verzögertem Zelltod aus. Der Shuttle kann sehr gut unterdrückt werden. Erfindungsgemäße elektrische Zellen eignen sich sehr gut zur Verwendung in Automobilen, Flugzeugen, Schiffen oder stationären Energiespeichern. Derartige Verwendungen sind ein weiterer Gegenstand der vorliegenden Erfindung.

Das erfindungsgemäße Elektrodenmaterial erlaubt die Herstellung von elektrischen Zellen mit einer hohen spezifischen Kapazität ohne den Zusatz von elementarem Schwefel, während gleichzeitig der sogenannte Sulfid-Shuttle unterdrückt und eine gesteigerte Lebensdauer, insbesondere auch bei Temperaturen unter 30°C, erreicht wird.

Die Erfindung wird durch folgende, die Erfindung jedoch nicht einschränkende Beispiele erläutert.

Angaben in % beziehen sich auf Gewichtsprozent, wenn nicht ausdrücklich anders angegeben.

### I. Synthese von Polysulfidbrücken enthaltendem Polymer

### I.1 Synthese von Polydisulfidcyanursäure (P1)

5 g Trithiocyanursäure (auch 1,3,5-Triazine-2,4,6-trithiol genannt; M = 177,27 g/mol, 28 mmol) wurden in 200 ml wasserfreiem Tetrahydrofuran vorgelegt und innerhalb von 5 Minuten gelöst. 5,7 g (M = 135,04 g/mol, 42,3 mmol) Dischwefeldichlorid (S₂Cl₂) wurden innerhalb von 10 Minuten tropfenweise zugegeben, wobei ein Temperaturanstieg von 5 °C beobachtet wurde. Die Reaktion wurde für eine Dauer von 6 h betrieben und die entstehende Salzsäure über einen Waschturm ausgetrieben. Der Niederschlag wurde abfiltriert, mit Tetrahydrofuran gewaschen und in Vakuum getrocknet.
Ausbeute: 7,6 g Feststoff (P1) entsprechend 99 %. Die berechnete theoretische spezifische Kapazität beträgt 595 mAh/g.
Elementaranalyse

| | berechnet | gefunden |
|---|---|---|
| Kohlenstoff | 13,33 % | 14,2 % |
| Schwefel | 71,13 % | 70,0 % |
| Stickstoff | 15,44 % | 15,1 % |

### II. Herstellung von Elektrodenmaterial und Elektroden

### II.1 Verarbeitung von P1 zu einer erfindungsgemäßen Kathode K1

7,0 g des Feststoffes P1 wurden mit 0,7 g Ruß (käuflich erhältlich als Printex XE 2 von Evonik) und 0,7 g Wolframcarbid in einer Reibschale homogenisiert. Ausbeute 8,3 g P1-h.

In einer Laborglasflasche wurden 0,50 g Polyvinylalkohol in 80,0 g Wasser/Isopropanol gelöst. Zur Herstellung der Tinte wurden anschließend, 1,62 g Ruß (käuflich erhältlich als Super P der Firma Timcal AG, 6743 Bodio, Schweiz) und 7,69 g P1-h zugegeben und gerührt. Zur Dispergierung wurde der Ansatz in ein Edelstahl-Mahlgefäß überführt und anschließend eine Kugelmühle (Pulverisette Firma Fritsch) verwendet, wobei für 30 min bei 300 U/min mit Edelstahlkugeln gerührt wurde. Nach der Dispergierung entstand eine sehr homogene Tinte mit cremiger Konsistenz. Die Tinte wurde mittels Airbrush-Verfahren auf einem Vakuumtisch (Temperatur: 60 °C) auf Aluminiumfolie (Dicke: 20 µm) aufgesprüht. Dabei wurde Stickstoff zum Sprühen eingesetzt. Es wurde eine Feststoffbeladung von 2,5 mg/cm² erzielt.

### II.2 Herstellung einer Vergleichskathode V-K2

In einer Laborglasflasche wurden 0,02 g Polyvinylalkohol in 16,0 g Wasser/Isopropanol gelöst. Zur Herstellung der Tinte wurden anschließend, 1,25 g Ruß (käuflich erhältlich als Super P der Firma Timcal AG, 6743 Bodio, Schweiz), 0,07 g Graphit (käuflich erhältlich als KS6 der Firma Timcal AG, 6743 Bodio, Schweiz) und 0,93 g Schwefel zugegeben und gerührt. Zur Dispergierung wurde der Ansatz in ein Edelstahl-Mahlgefäß überführt und anschließend eine Kugelmühle (Pulverisette Firma Fritsch) verwendet, wobei für 30 min bei 300 U/min mit Edelstahlkugeln gerührt wurde. Nach der Dispergierung entstand eine sehr homogene Tinte mit cremiger Konsistenz. Die erhaltene Tinte wurde mittels Airbrush-Verfahren auf einem Vakuumtisch (Temperatur: 60 °C) auf Aluminiumfolie (Dicke: 20 µm) aufgesprüht. Dabei wurde Stickstoff zum Sprühen eingesetzt. Es wurde eine Feststoffbeladung von 2,5 mg/cm² erzielt.

### III. Testen der Kathoden in elektrochemischen Zellen

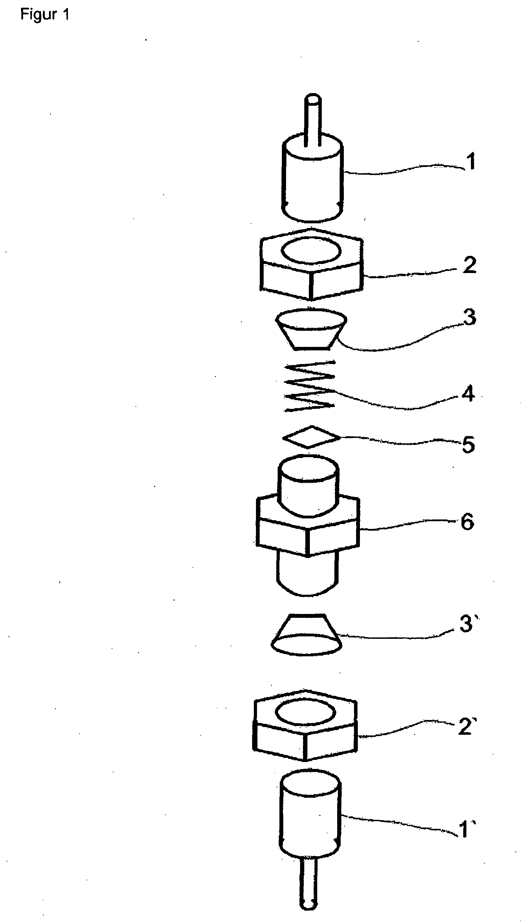

Für die elektrochemische Charakterisierung des aus dem erfindungsgemäßen Polymer P1 hergestellten erfindungsgemäßen Elektrodenmaterials und der daraus hergestellten Kathode K1 sowie zur Charakterisierung der Vergleichskathode V-K2 baute man elektrochemische Zellen gemäß Figur 1. Dazu wurden neben den in II. hergestellten Kathoden jeweils folgende Komponenten eingesetzt:
Anode: Li-Folie, 50 µm dick,
Separator: 38 µm dicke, mikroporöse, dreilagige Membran (PP/PE/PP) (käuflich erhältlich als Celgard^{®} 2340)
Kathode: nach Beispiel II.
Elektrolyt: 1M LiTFSI (LiN(SO₂CF₃)₂) in 1:1 Gemisch von Dioxolan und Dimethoxyethan

Figur 1 zeigt den schematischen Aufbau einer auseinandergenommenen elektrochemischen Zelle zum Testen von erfindungsgemäßen Elektrodenmaterialien.

Die Erläuterungen in Figur 1 bedeuten:
- 1, 1': Stempel
- 2, 2': Mutter
- 3, 3': Dichtungsring -jeweils doppelt, der jeweils zweite, etwas kleinere Dichtungsring ist hier nicht gezeigt
- 4: Spiralfeder
- 5: Stromableiter aus Nickel
- 6: Gehäuse

Das Laden und Entladen der jeweiligen Zelle wurde mit einem Strom von 0,22 mA bei Potentialen im Bereich von 1,8 bis 2,5 V durchgeführt. Ergebnisse sind in der Tabelle 1 zusammengefasst.

**Tabelle 1: Testergebnisse von erfindungsgemäßen und nicht erfindungsgemäßen elektrochemischen Zellen**

| Beispiel | Schwefelausnutzung 5. Zyklus | Schwefelausnutzung 50. Zyklus | Schwefelausnutzung 100. Zyklus |
|---|---|---|---|
| Kathode K1 auf Basis von P1 | 86 % | 83 % | 76% |
| Kathode V-K2 auf Basis S₈ | 68 % | 48% | - (Batterie kollabiert) |

Die Prozentangaben für die Schwefelausnutzung beziehen sich auf einen theoretisch berechneten Wert.

## Patentansprüche

1. Elektrodenmaterial für eine geladene elektrische Zelle enthaltend
(A) Polysulfidbrücken enthaltendes Polymer enthaltend zwei- oder dreibindige Wiederholungseinheiten der Formel (I) 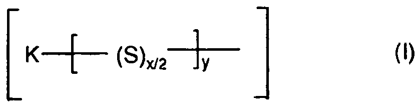 worin
K einen zwei- oder dreibindigen organischen Rest mit 1 bis 20 Kohlenstoffatomen darstellt, der weitere funktionelle Gruppen und/oder ein oder mehrere Heteroatome ausgewählt aus der Gruppe der Elemente bestehend aus O, S, N, P, Si und F enthalten kann,
y gleich 2 oder 3 ist,
x gleich oder verschieden sein kann und eine ganze Zahl von 3 bis 12 ist, und mindestens einer der Reste K über y (S)ₓ-Brücken mit y weiteren Resten K verknüpft ist,
(B) Kohlenstoff in einer Modifikation, die mindestens 60% sp²-hybridisierte C-Atome umfasst, und
(C) gegebenenfalls mindestens ein weiteres Polymer als Bindemittel,
**dadurch gekennzeichnet, dass** das Elektrodenmaterial als weitere Komponente (D) Wolframcarbid enthält.

2. Elektrodenmaterial nach Anspruch 1, **dadurch gekennzeichnet, dass** in dem Polysulfidbrücken enthaltenden Polymer (A) y gleich 3 ist.

3. Elektrodenmaterial nach Anspruch 1 oder 2, **dadurch gekennzeichnet, dass** in dem Polysulfidbrücken enthaltenden Polymer (A) K einen Rest der Formel (II) 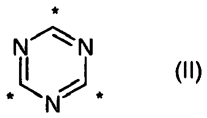 darstellt, worin die (S)ₓ-Brücken an den mit * gekennzeichneten Kohlenstoffatomen anknüpfen.

4. Elektrodenmaterial nach einem der Ansprüche 1 bis 3, **dadurch gekennzeichnet, dass** in dem Polysulfidbrücken enthaltenden Polymer (A) x gleich 4 ist.

5. Elektrische Zelle enthaltend mindestens eine Elektrode, die aus oder unter Verwendung eines Elektrodenmaterials nach einem der Ansprüche 1 bis 4 hergestellt wurde.

6. Elektrische Zelle nach Anspruch 5, **dadurch gekennzeichnet, dass** sie weiterhin mindestens eine Elektrode enthält, die metallisches Lithium enthält.

7. Elektrische Zelle nach Anspruch 5 oder 6, **dadurch gekennzeichnet, dass** sie einen flüssigen Elektrolyten, der ein Lithium-haltiges Leitsalz enthält, umfasst.

8. Elektrische Zelle nach einem der Ansprüche 5 bis 7, **dadurch gekennzeichnet, dass** sie mindestens ein nicht-wässriges Lösungsmittel enthält, gewählt aus Polymeren, cyclischen oder nicht-cyclischen Ethern, nicht-cyclischen oder cyclischen Acetalen und cyclischen oder nicht-cyclischen organischen Carbonaten.

9. Verwendung von elektrischen Zellen nach einem der Ansprüche 5 bis 8 in Automobilen, Flugzeugen, Schiffen oder stationären Energiespeichern.

## Claims

1. An electrode material for a charged electrical cell, comprising
(A) polymer comprising polysulfide bridges and comprising di- or trivalent repeat units of the formula (I) 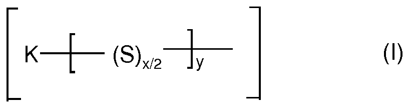 in which
K is a di- or trivalent organic radical which has 1 to 20 carbon atoms and may comprise further functional groups and/or one or more heteroatoms selected from the group of the elements consisting of 0, S, N, P, Si and F,
y is 2 or 3,
x may be the same or different and is an integer from 3 to 12, and at least one of the K radicals is bonded via y (S)ₓ bridges to y further K radicals,
(B) carbon in a polymorph comprising at least 60% sp²-hybridized carbon atoms, and
(C) optionally at least one further polymer as a binder,
wherein the electrode material comprises tungsten carbide as a further component (D).

2. The electrode material according to claim 1, wherein y in the polymer (A) comprising polysulfide bridges is 3.

3. The electrode material according to claim 1 or 2, wherein K in the polymer (A) comprising polysulfide bridges is a radical of the formula (II) 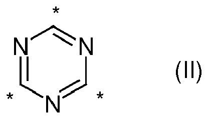 in which the (S)ₓ bridges are connected to the carbon atoms designated by *.

4. The electrode material according to any of claims 1 to 3, wherein x in the polymer (A) comprising polysulfide bridges is 4.

5. An electrical cell comprising at least one electrode which has been produced from or using an electrode material according to any of claims 1 to 4.

6. The electrical cell according to claim 5, which further comprises at least one electrode comprising metallic lithium.

7. The electrical cell according to claim 5 or 6, which comprises a liquid electrolyte comprising a lithium-containing conductive salt.

8. The electrical cell according to any of claims 5 to 7, which comprises at least one nonaqueous solvent selected from polymers, cyclic and noncyclic ethers, noncyclic and cyclic acetals and cyclic and noncyclic organic carbonates.

9. The use of electrical cells according to any of claims 5 to 8 in automobiles, aircraft, ships or stationary energy stores.

## Revendications

1. Matériau d'électrode pour une cellule électrique chargée, contenant
(A) un polymère comportant des ponts polysulfure, qui contient des motifs répétitifs à deux ou trois liaisons, de formule (I) 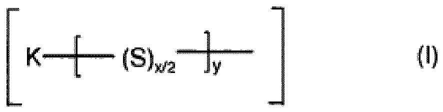 dans laquelle
K représente un radical organique à deux ou trois liaisons, ayant de 1 à 20 atomes de carbone, qui peut contenir d'autres groupes fonctionnels et/ou un ou plusieurs hétéroatomes choisis dans le groupe des éléments consistant en 0, S, N, P, Si et F,
y est égal à 2 ou 3,
x peut être le même ou différent et est un nombre entier valant de 3 à 12, et
au moins l'un des radicaux K est relié à y autres radicaux K par y ponts (S)ₓ,
(B) du carbone sous une forme qui comprend au moins 60 % d'atomes de carbone hybridés sp², et
(C) éventuellement au moins un autre polymère en tant que liant,
**caractérisé en ce que** le matériau d'électrode contient comme autre composant (D) du carbure de tungstène.

2. Matériau d'électrode selon la revendication 1, **caractérisé en ce que** dans le polymère (A) contenant des ponts polysulfure y est égal à 3.

3. Matériau d'électrode selon la revendication 1 ou 2, **caractérisé en ce que** dans le polymère (A) contenant des ponts polysulfure K représente un radical de formule (II) 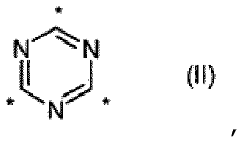 dans laquelle les ponts (S)ₓ sont reliés aux atomes d'atomes de carbone désignés par *.

4. Matériau d'électrode selon l'une quelconque des revendications 1 à 3, **caractérisé en ce que** dans le polymère (A) contenant des ponts polysulfure x est égal à 4.

5. Cellule électrique contenant au moins une électrode qui a été produite à partir ou avec utilisation d'un matériau d'électrode selon l'une quelconque des revendications 1 à 4.

6. Cellule électrique selon la revendication 5, **caractérisée en ce qu'**elle contient en outre au moins une électrode qui contient du lithium métallique.

7. Cellule électrique selon la revendication 5 ou 6, **caractérisée en ce qu'**elle comprend un électrolyte liquide qui contient un sel conducteur contenant du lithium.

8. Cellule électrique selon l'une quelconque des revendications 5 à 7, **caractérisée en ce qu'**elle contient au moins un solvant non aqueux, choisi parmi des polymères, des éthers cycliques ou non cycliques, des acétals cycliques ou non cycliques et des carbonates organiques cycliques ou non cycliques.

9. Utilisation de cellules électriques selon l'une quelconque des revendications 5 à 8, dans des automobiles, des aéronefs, des bateaux ou des accumulateurs d'énergie stationnaires.
